# EUROPÄISCHE PATENTANMELDUNG

(11) **EP 1 070 655 A2**
(43) Veröffentlichungstag der Anmeldung: **24.01.2001**
(21) Anmeldenummer: 00113111.9
(22) Anmeldetag: 28.06.2000
(51) Int. Cl.: B62D 21/15, B60H 1/00

(54) **Kraftfahrzeug mit quer angeordneter Motor-Getriebeeinheit**

(30) Priorität: 19.07.1999 DE 19933781
(71) Anmelder: Volkswagen Aktiengesellschaft, 38436 Wolfsburg (DE)
(72) Erfinder: Milbradt, Knut, Dr., 30827 Garbsen (DE)

(57) **Zusammenfassung**

Bei einem Kraftfahrzeug mit einer quer angeordneten Motor-Getriebeeinheit (1) und einer einen Motorraum (4) von einem Fahrgastraum trennenden Spritzwand (11) wird das Getriebe (3) in Fahrzeuglängsrichtung hinter dem Motor (2) angeordnet. Zudem ist in der Spritzwand eine Vertiefung (12) zur Aufnahme eines Zusatzaggregates (20) vorgesehen, in die ein Abschnitt des Motors unter Verformung des Zusatzaggregates hineinschiebbar ist. Hierdurch läßt sich die Deformationslänge des Vorderwagens und somit die Frontalcrashsicherheit weiter verbessern. Die Erfindung eignet sich besonders für kleinere Fahrzeuge.

## Beschreibung

Die Erfindung betrifft ein Kraftfahrzeug mit quer angeordneter Motor-Getriebeeinheit, umfassend eine Fahrzeugkarosserie mit einer einen Motorraum und einen Fahrgastraum trennenden Spritzwand, und einen in dem Motorraum quer angeordneten Motor mit einem daran angekoppelten Getriebe.

Die Erfindung eignet sich insbesondere für kleinere Personenkraftwagen mit Motoren kurzer Baulänge in Kurbelwellenrichtung.

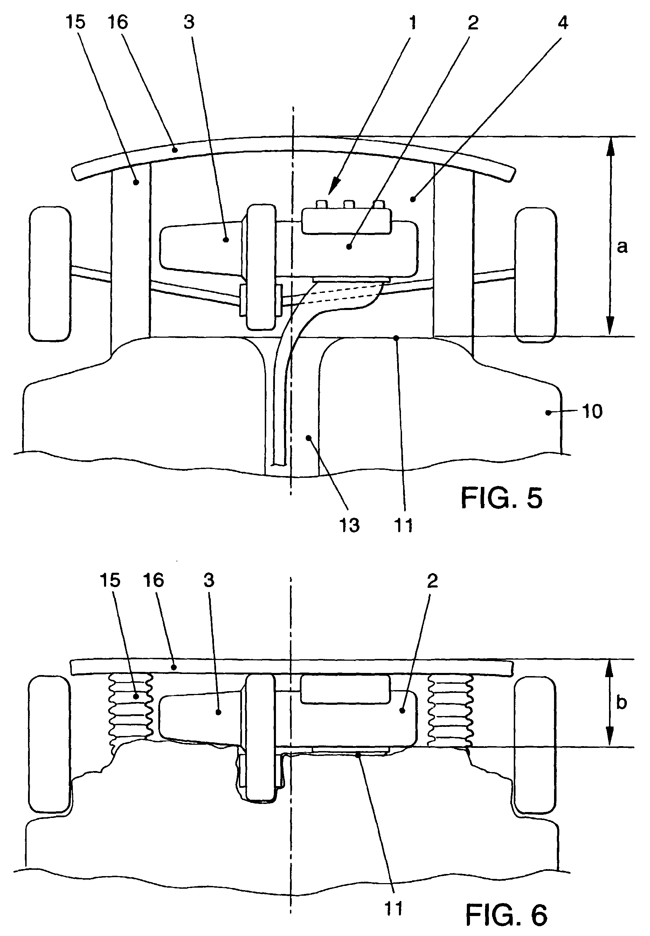

Ein Kraftfahrzeug der eingangs genannten Art ist der Anmelderin aus ihrer eigenen Entwicklung intern bekannt und in den Figuren 5 und 6 dargestellt. Figur 5 zeigt eine Draufsicht auf den Vorderwagen eines Kraftfahrzeuges mit einer quer eingebauten Motor-Getriebeeinheit 1, wobei der Motor 2 und das Getriebe 3 im Motorraum 4 in Reihe angeordnet sind. Der Motorraum 4 wird durch eine Spritzwand 11 der Karosserie 10 zu einem nicht näher dargestellten Fahrgastraum abgeschlossen. Seitlich der Motor-Getriebeeinheit 1 sind Crashelemente 15 vorgesehen, die bei einem Frontalaufprall verformt werden und einen Teil der Crashenergie absorbieren, wie dies in Figur 6 dargestellt ist.

Das Energieaufnahmevermögen des Vorderwagens und damit die Frontcrashsicherheit hängen in starkem Maße von dem Verformungsvermögen der Karosserie, und insbesondere der Deformationslänge der den Motorraum umgebenden Bereiche ab, da der Motor wie auch das Getriebe als relativ starre, kompakte Blöcke selbst nur sehr wenig Crashenergie aufnehmen können.

Die Deformationslänge ergibt sich als Differenz aus der Länge a des unverformten Vorbaus und der sogenannten Blocklänge b im voll gestauchten Zustand. Je größer die Deformationslänge ist, desto mehr Crashenergie kann von der den Motorraum umgebenden Struktur absorbiert werden.

Wie aus den Figuren 5 und 6 zu erkennen ist, hängt die Blocklänge b stark von der Breite der Motor-Getriebeeinheit in Fahrtrichtung ab. In Falle eines Frontalcrashs wird die quer angeordnete Motor-Getriebeeinheit mit ihrer Breitseite gegen die den Fahrgastraum begrenzende Spritzwand gedrückt, wobei aufgrund der flächigen Verteilung der durch die Motor-Getriebeeinheit übertragenen Crashenergie die Spritzwand lediglich um eine relativ kurze Strecke in Richtung des Fahrgastraums verformt wird.

Der Erfindung liegt die Aufgabe zugrunde, die Frontalcrashsicherheit bei Kraftfahrzeugen mit quer zur Fahrzeuglängsachse angeordneter Motor-Getriebeeinheit unter Beibehaltung der Außenlänge des Fahrzeugvorbaus weiter zu verbessern.

Diese Aufgabe wird durch ein Kraftfahrzeug der eingangs genannten Art gelöst, bei dem das Getriebe in Fahrzeuglängsrichtung hinter dem Motor angeordnet ist und die Spritzwand eine Vertiefung zur Aufnahme eines Zusatzaggregates aufweist, in die ein Abschnitt des Motors unter Verformung des Zusatzaggregates hineinschiebbar ist.

Durch die Hintereinanderschaltung von Motor und Getriebe ergibt sich bei Betrachtung in Fahrzeuglängsrichtung im Vergleich zur Reihenschaltung zunächst eine Verlängerung der Motor-Getriebeeinheit. Diese ist jedoch bei kleineren Motoren für die Fahrzeuglänge unkritisch, da dem Verlust an Längsraum ein Gewinn an Raum in Fahrzeugbreitenrichtung gegenübersteht, in dem Hilfs- und Zusatzaggregate untergebracht werden können.

Dafür wird jedoch bei Betrachtung in Fahrzeuglängsrichtung die Silhouette der Motor-Getriebeeinheit deutlich schmäler, so daß sich diese im Crashfall tiefer in die Spritzwand hineinverschieben läßt. Hierzu wird eine Vertiefung zur Aufnahme eines Zusatzaggregates, beispielsweise eines Heiz- und/oder Klimagerätes, an die Motorkontur angepaßt. Aus der damit verbundenen Verkürzung der Blocklänge b resultiert bei Beibehaltung der Vorbaulänge a eine größere Deformationslänge a - b und damit ein größeres Crashenergieaufnahmepotential des Vorderwagens bei einem Frontalcrash. Insgesamt ergibt sich damit eine verbesserte Frontcrashsicherheit, ohne daß hierzu eine Vergrößerung der Fahrzeuglänge erforderlich wäre.

Gemäß einer vorteilhaften Ausgestaltung der Erfindung weist die Fahrzeugkarosserie bodenseitig im Bereich der Spritzwand einen Mitteltunnel auf, der unterhalb der Vertiefung angeordnet ist. Die Vertiefung öffnet sich in den Mitteltunnel. Hierdurch kann die Eindringtiefe der Motor-Getriebeeinheit in die Spritzwand weiter verbessert werden. Vorzugsweise ist dabei ein Abschitt des Getriebes in den Freiraum des Mitteltunnels hineinschiebbar.

Zu diesem Zweck wird vorzugsweise zudem der Mitteltunnel in seinem Mündungsbereich zum Motorraum sich verbreiternd ausgebildet, derart, daß bei Verlagerung eines Abschnittes des Motors in die Zusatzaggregatvertiefung ein Abschnitt des Getriebes in den sich verbreiternden Mündungsabschnitt des Mitteltunnels eingreift. Die Verschiebbarkeit der gesamten Motor-Getriebeeinheit wird hier durch einen Aufnahmeraum ermöglicht, der durch die Vertiefung in der Spritzwand wie auch den Mündungsbereich des Mitteltunnels gebildet wird. Dabei können auch Abschnitte des Motors in den Mündungsbereich und/oder Abschnitte des Getriebes in die Vertiefung gelangen. Alternativ kann die Vertiefung eine Formgestaltung aufweisen, die allein bereits die Verschiebbarkeit der Motor-Getriebeeinheit, d.h. eine teilweise Aufnahme derselben in der Vertiefung im Crashfall ermöglicht.

In besonders günstiger Weise besitzt die Motor-Getriebeeinheit im Seitenriß eine im wesentlichen L-artige Gestalt. Der nach oben weisende Abschnitt kann so im Falle eines Frontalcrashs von der frontseitigen Vertiefung aufgenommen werden, während der sich horizontal erstreckende Abschnitt von einem unteren Bereich der Fahrzeugkarosserie oder gegebenenfalls unter der Fahrzeugkarosserie aufgenommen wird. Trotz des weiteren Vordringens der Motor-Getriebeeinheit in Richtung des Fahrgastraum ist eine Erhöhung der Gefährdung von Personen im Fahrgastraum hiermit nicht verbunden, da selbst bei einer stärkeren Verformung der Spritzwand die Verformung in der Fahrzeugmitte und damit außerhalb der Fahrer- bzw. Beifahrerposition erfolgt.

Gemäß einer weiteren vorteilhaften Ausgestaltung der Erfindung ist die Fahrzeugkarosserie mit sich in Fahrzeuglängsrichtung erstreckenden, jeweils stauchbaren Crashelementen zur Aufnahme von Verformungsenergie versehen, die beidseitig der Motoreinheit verlaufen und vorzugsweise durch einen Querbalken vor der Motoreinheit miteinander verbunden sind.

Weitere vorteilhafte Ausgestaltungen sind in den Unteransprüchen angegeben.

Im Folgenden wird die Erfindung anhand eines in der Zeichnung dargestellten Ausführungsbeispiels erläutert. Die Zeichnung zeigt in
- Figur 1: ein Ausführungsbeispiel eines Kraftfahrzeugvorderwagens mit quer angeordneter Motor-Getriebeeinheit im unverformten Zustand in Draufsicht;
- Figur 2: einen Schnitt entlang der Linie A-A von Figur 1;
- Figur 3: das Ausführungsbeispiel von Figur 1 im gestauchten Zustand nach einem Frontalcrash;
- Figur 4: eine Seitenansicht der Motor-Getriebeeinheit und der Spritzwand im gestauchten Zustand;
- Figur 5: einen der Anmelderin intern bekannten Kraftfahrzeugvorderwagen mit quer angeordneter Motor-Getriebeeinheit; und
- Figur 6: den Vorderwagen von Figur 6 im gestauchten Zustand.

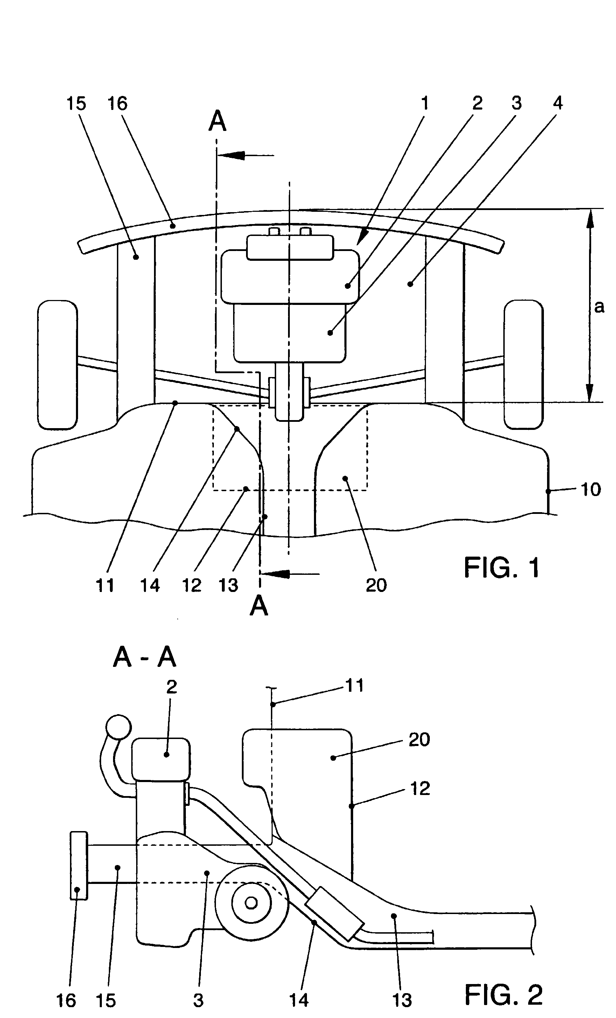

Das Ausführungsbeispiel zeigt in den Figuren 1 bis 4 den Vorderwagen eines Kraftfahrzeuges mit einer quer zur Fahrzeuglängsachse angeordneten Motor-Getriebeeinheit 1 im Frontbereich des Fahrzeuges. Alternativ kann die Motor-Getriebeeinheit auch im Fahrzeugheck untergebracht werden. Im Folgenden wird lediglich die Frontvariante beschrieben, da für die Heckvariante lediglich die Bezugsrichtungen umzukehren sind.

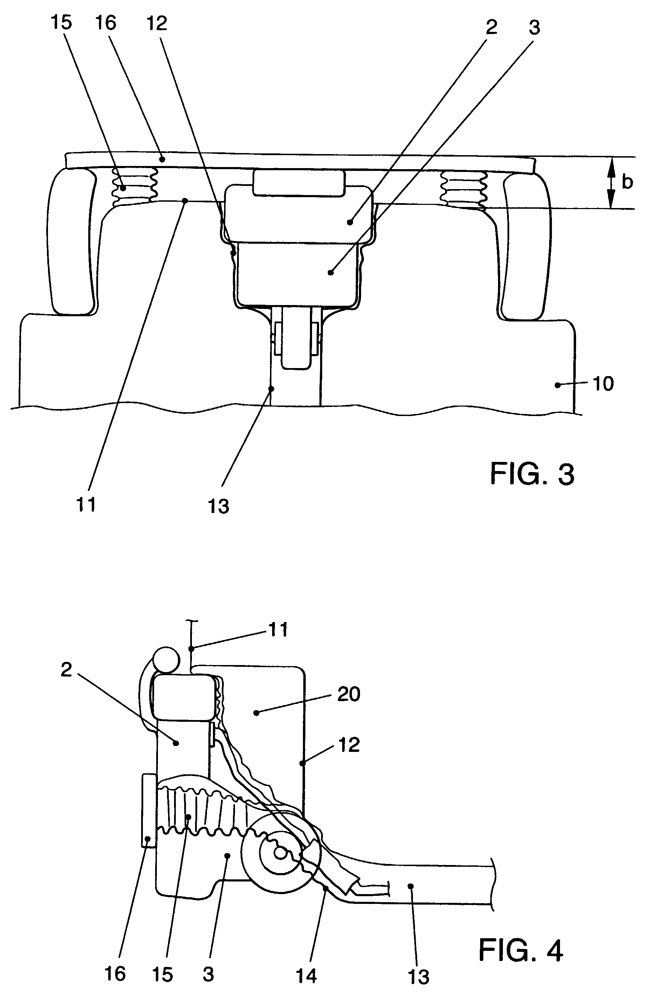

Die Motor-Getriebeeinheit 1 weist einen Motor 2 sowie ein dahinter, d.h. zu einem Fahrgastraum hin, angeordnetes Getriebe 3 auf, die in einem Motorraum 4 untergebracht sind. Wie insbesondere aus den Figuren 2 und 4 zu erkennen ist, besitzt die Motor-Getriebeeinheit 1 bei Betrachtung quer zur Fahrzeuglängsachse eine im wesentlichen L-artige Form. Dabei ist der eigentliche Motor 2 in dem sich im wesentlichen vertikal erstreckenden Bereich angeordnet, während der Getriebeteil den unteren bzw. sich im wesentlichen horizontal nach hinten erstreckenden Bereich einnimmt. Bei Betrachtung in Richtung der Fahrzeuglängsachse weist der das Getriebe oder einen Teil desselben aufnehmende, im wesentlichen horizontale Abschnitt eine höchstens gleich große Breite auf, wie der sich im wesentlichen vertikal erstreckende Abschnitt. Als Motoren kommen vor allen Versionen mit kurz bauendem Zylinderblock in Frage, die zur Verringerung der Fahrzeughöhe im Vorderwagenbereich auch geneigt eingebaut werden können.

Der Motorraum 4 ist von der Fahrzeugkarosserie 10 begrenzt, die zwischen dem Motorraum 4 und einem in der Zeichnung nicht dargestellten Fahrgastraum eine Spritzwand 11 als Trennung aufweist. Diese Spritzwand 11 erstreckt sich hinter dem Motor 2 im wesentlichen in vertikaler Richtung und geht weiter unten in eine Bodenwand über.

Im Bereich der Fahrzeuglängsachse ist die Spritzwand 11 mit einer Vertiefung 12 in Richtung des Fahrgastraums versehen, die der Aufnahme eines komprimierbaren Zusatzaggregates 20, hier der Fahrzeugheizung, dient. Zudem kann dort auch ein Klimatisierungsaggregat untergebracht werden. Die Vertiefung 12 wie gegebenenfalls auch das Zusatzaggregat 20 sind der Gestalt der Motorsilhouette entsprechend ausgebildet, so daß zumindest ein Abschnitt des Motors 2 in die Vertiefung 12 ohne eine Verformung der Spritzwand 11 hineingeschoben werden könnte, sofern man das Zusatzaggregat 20 wegließe. Im Falle eines Frontalcrashs kann so der Motor 2 tiefer die Spritzwand 11 in Richtung des Fahrgastraumes verschoben werden als bei der eingangs erläuterten Konstruktion nach den Figuren 5 und 6. Das im Realfall in der Vertiefung angeordnete, komprimierbare Zusatzaggregat 20 wird hierbei zerstört. Die fahrgastraumseitige Wand der Vertiefung 12 ist ausreichend starr ausgebildet, um einer Verlagerung des Zusatzaggregates 20 tief in den Fahrgastraum hinein vorzubeugen und den zum Zusammendrücken des Zusatzaggregates 20 erforderlichen Widerstand bereitzustellen.

Wie insbesondere Figur 2 entnommen werden kann, öffnet sich die Vertiefung 12 in einen im Bodenbereich der Karosserie 10 vorgesehenen Mitteltunnel 13. Der Mitteltunnel 13 weist zum Motorraum 4 hin einen sich trichterartig verbreiternden Mündungsbereich 14 unterhalb der Vertiefung 12 auf, dessen Größe an den sich im wesentlichen horizontal nach hinten erstreckenden Abschnitt der Motor-Getriebeeinheit 1 angepaßt ist. Bei einem Frontalcrash wird so auch der nach hinten auskragende Abschnitt ohne wesentlichen Verformungswiderstand innerhalb bzw. unterhalb der Spritzwand 11 aufgenommen.

Daraus resultiert im Crashfall trotz der im Vergleich zu den Figuren 5 und 6 in Fahrzeuglängsrichtung längeren Motor-Getriebeeinheit 1 eine geringere Blocklänge b vor der Spritzwand, so daß bei konstanter Vorbaulänge a ein größerer Deformationsweg a - b zur Verfügung steht.

Zur Aufnahme eines großen Anteils der Crashenergie sind an der Karosserie 10 stauchbare, stangenartige Crashelemente 15 vorgesehen, die sich von der Spritzwand 11 beiderseits der Motor-Getriebeeinheit 1 nach vorne erstrecken. In dem gezeigten Ausführungsbeispiel sind die Crashelemente 15 an ihren frontseitigen Enden mit einem Querträger 16 zu einem den Motorraum 4 umgebenden Rahmen verbunden. Ein Vergleich der Figuren 3 und 6 zeigt die bessere Ausnutzung der verformbaren Länge der Crashelemente 15, die gleichbedeutend mit einem größeren Energieaufnahmevermögen ist. Dies wiederum verringert im Falle eines Frontalcrashs die auf die Fahrzeuginsassen einwirkenden maximalen Beschleunigungen und erhöht somit die Frontcrashsicherheit.

### BEZUGSZEICHENLISTE

- 1: Motor-Getriebeeinheit
- 2: Motor
- 3: Getriebe
- 4: Motorraum
- 10: Karosserie
- 11: Spritzwand
- 12: Vertiefung
- 13: Mitteltunnel
- 14: Mündungsbereich
- 15: Crashelement
- 16: Querträger
- 20: Zusatzaggregat

## Patentansprüche

1. Kraftfahrzeug mit quer angeordneter Motor-Getriebeeinheit, umfassend eine Fahrzeugkarosserie (10) mit einer einen Motorraum (4) und einen Fahrgastraum trennenden Spritzwand (11), und einen in dem Motorraum quer angeordneten Motor (2) mit einem daran angekoppelten Getriebe (3), **dadurch gekennzeichnet,** daß das Getriebe (3) in Fahrzeuglängsrichtung hinter dem Motor (2) angeordnet ist und die Spritzwand (11) eine Vertiefung (12) zur Aufnahme eines Zusatzaggregates (20) aufweist, in die ein Abschnitt des Motors (2) unter Verformung des Zusatzaggregates (20) hineinschiebbar ist.

2. Kraftfahrzeug mit quer angeordneter Motor-Getriebeeinheit nach Anspruch 1, **dadurch gekennzeichnet,** daß in der Vertiefung (12) ein Heiz- und/oder Klimagerät als Zusatzaggregat (20) angeordnet ist.

3. Kraftfahrzeug mit quer angeordneter Motor-Getriebeeinheit Anspruch 1 oder 2, **dadurch gekennzeichnet,** daß die Fahrzeugkarosserie (10) bodenseitig im Bereich der Spritzwand (11) einen Mitteltunnel (13) aufweist, der unterhalb der Vertiefung angeordnet ist, wobei sich die Vertiefung (12) in den Mitteltunnel (13) öffnet.

4. Kraftfahrzeug mit quer angeordneter Motor-Getriebeeinheit nach Anspruch 3, **dadurch gekennzeichnet,** daß ein Abschnitt des Getriebes (3) in den Freiraum des Mitteltunnels (13) hineinschiebbar ist.

5. Kraftfahrzeug mit quer angeordneter Motor-Getriebeeinheit nach Anspruch 3 oder 4, **dadurch gekennzeichnet,** daß der Mitteltunnel (13) in seinem Mündungsbereich zum Motorraum (4) sich verbreiternd, vorzugsweise in Ansicht von oben trichterartig verbreiternd, ausgebildet ist, derart, daß bei Verlagerung eines Abschnittes des Motors (2) in die Zusatzaggregatvertiefung (12) ein Abschnitt des Getriebes (3) in den sich verbreiternden Mündungsabschnitt (14) des Mitteltunnels (13) eingreift.

6. Kraftfahrzeug mit quer angeordneter Motor-Getriebeeinheit nach einem der Ansprüche 1 bis 5, **dadurch gekennzeichnet,** daß die Motor-Getriebeeinheit (1) im Seitenriß eine im wesentlichen L-artige Gestalt aufweist.

7. Kraftfahrzeug mit quer angeordneter Motor-Getriebeeinheit nach einem der Ansprüche 1 bis 6, **dadurch gekennzeichnet,** daß der Motor (2) in im wesentlichen aufrechter Stellung angeordnet ist.

8. Kraftfahrzeug mit quer angeordneter Motor-Getriebeeinheit nach einem der Ansprüche 1 bis 7, **dadurch gekennzeichnet,** daß das Getriebe (3) in einem sich im wesentlichen horizontal und rückseitig erstreckenden unteren Abschnitt der Motor-Getriebeeinheit (1) vorgesehen ist.

9. Kraftfahrzeug mit quer angeordneter Motor-Getriebeeinheit nach einem der Ansprüche 1 bis 8, **dadurch gekennzeichnet,** daß die Fahrzeugkarosserie (10) mit sich in Fahrzeuglängsrichtung erstreckenden, jeweils stauchbaren Crashelementen (15) zur Aufnahme von Verformungsenergie versehen ist, die beidseitig der Motoreinheit (1) verlaufen und vorzugsweise durch einen Querbalken (16) vor der Motoreinheit (1) miteinander verbunden sind.
